# EUROPEAN PATENT SPECIFICATION

(11) **EP 0 455 279 B1**
(45) Date of publication and mention of the grant of the patent: **08.06.1994**
(21) Application number: 91200683.0
(22) Date of filing: 25.03.1991
(51) Int. Cl.: B62D 21/14, B60P 3/42, B62D 25/20

(54) **Motor vehicle floor structure**
Bodenwanne für Kraftfahrzeuge
Plancher de fond pour véhicule automobile

(30) Priority: 01.05.1990 NL 9001041
(43) Date of publication of application: 06.11.1991
(73) Proprietor: Netherlands Car B.V., 5708 HT Helmond (NL)
(72) Inventor: Houtzager, Kees, NL-5591 PA Heeze (NL)
(74) Representative: Timmers, Cornelis Herman Johannes

(56) References cited:
- EP-A- 0 297 057
- DE-A- 2 610 299
- FR-A- 1 151 659

## Description

The invention relates to a motor vehicle floor structure, comprising a front panel and rear panel, interconnected by means of a connecting piece at right angles to the longitudinal axis of the vehicle.

Such a floor structure is known from EP-A-O,297,057.

The object of the structure known from this publication is to vary the wheelbase of a motor vehicle type using a standard front panel and a standard rear panel by either or not fitting the connecting piece between them. The connecting piece used for this purpose forms in fact an extension of the front panel to the shape and contours of which it is adapted, and is accommodated between said front panel and a transverse panel lying at right angles thereto and connected to the rear panel which is situated higher than the front panel.

The object of the invention is to improve this known structure in such a way that, in addition to the possibility of varying the length of the bottom of the vehicle floor, and thus of the wheelbase, as desired and in a simple manner, a strengthening of the whole structure of the vehicle is obtained. This object is achieved according to the invention by the measures described in the characterizing clause of the main claim.

According to the invention, the variation is not obtained by merely extending the front panel, but by varying the configuration of the connecting piece which provides the connection between front panel and rear panel, the proposed design of the connecting piece giving the possibility of varying as desired the distance which the rear panel lies above the front panel.

Preferred embodiments are described in claims 2 to 4.

The invention is elucidated with reference to the drawing, in which:
Figure 1 shows a schematic longitudinal section of the floor structure of a motor vehicle, made up of a front panel and a rear panel connected thereto by means of a connecting piece;
Figure 2 shows a schematic longitudinal section of a second embodiment of this structure with a differently shaped connecting piece;
Figure 3 shows a perspective view of a part of the floor structure according to Figure 2.

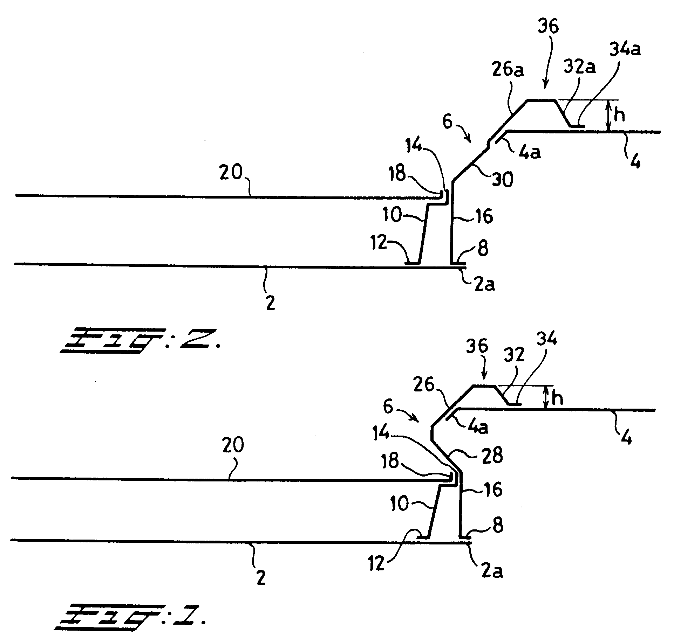

In Figure 1 reference numeral 2 indicates the front panel and reference numeral 4 the rear panel. Front panel 2 and rear panel 4 are interconnected by means of a connecting piece 6. The design thereof according to the invention provides the possibility of varying the distance between the front edge 4a of the rear panel 4 and the rear edge 2a of the front panel 2, and thus, with essentially the same parts, achieving a variation in the wheelbase or the length of the vehicle body.

The connecting piece 6 has a flanged edge 8 by which it is welded onto the front panel 2, and a stepped section part 10 is incorporated between said connecting piece 6 and the front panel 2, the edge 12 thereof being welded onto the front panel 2 and the raised edge 14 being welded onto the upgoing part 16 of the connecting piece 6. The flanged edge 18 of the tunnel 20 is also welded together therewith, while the other ends of the tunnel are also designed with flanged edges (not shown in any further detail) used for the welding.

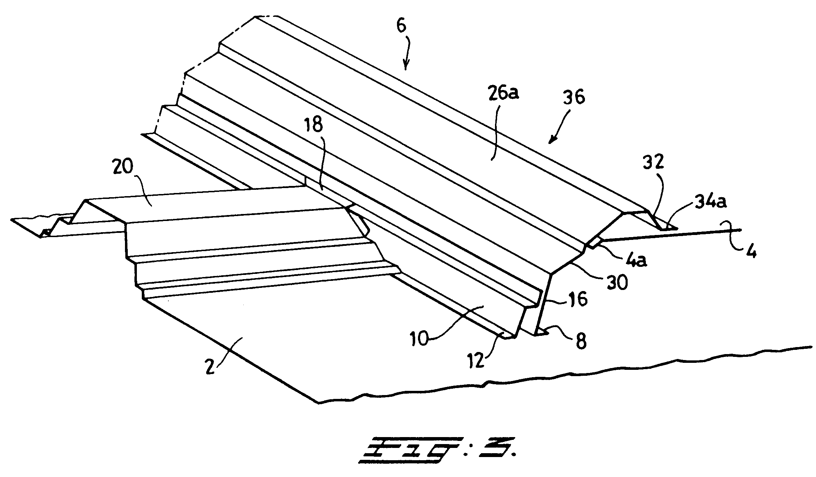

It is observed out that for the sake of clarity the parts to be welded together are shown spaced apart in Figures 1 and 2.

The - already mentioned - front edge 4a of the rear panel 4 is flanged downwardly at an angle and is welded onto an upward slanting fixing face 26, or 26a respectively in the embodiment of the connecting piece 6 according to Figure 2.

The variation in vehicle length or wheelbase is obtained by a suitable choice of the configuration of the part of the connecting piece which lies between the vertical fixing face 16 and the fixing place of the front edge 4a to the upward slanting fixing face 26 (26a). In the embodiment according to Figure 1 the raised face 16 merges into an upgoing, forward sloping connecting face 28 to which the upgoing, backward sloping fixing face 26 connects, while in the embodiment according to Figure 2 the raised face 16 continues into a first upgoing, backward sloping face 30 with the also upgoing, backward sloping fixing face 26a connecting thereto. This means that in this embodiment the front edge 4a lies behind the rear edge 2a, while in the embodiment according to Figure 1 the front edge 4a lies in front of the rear edge 2a.

The desired variation can thus be achieved using the same parts, solely by the choice of the connecting piece 6.

The connecting piece 6 is preferably further designed in such a way that the fixing face 26, 26a running upwards at an angle continues to a certain height (h) above the rear panel 4 and then merges into a part 32, 32a which slants downwards and continues into the end edge 34, 34a to be fixed to the rear plate 4 by welding.

In this way the desired fixed roof-shaped raised part 36 situated below the seating part of the rear seat is achieved, which part is designed to prevent a rear seat passenger from shooting through under the (lap) belt in the event of a collision (the so-called "submarine effect").

## Claims

1. Motor vehicle floor structure, comprising a front panel and rear panel interconnected by means of a connecting piece (6) lying at right angles to the longitudinal axis of the vehicle, **characterized in that**
- fixed to the rear end of the front panel (2) in the transverse direction of the vehicle is a stepped section part (10) with an edge (12) to be fixed to the floor and with a fixing flange (14) lying at a distance thereabove, essentially at right angles to the front panel, for a face (16) - situated at right angles to the front panel (2) - of the connecting piece (6) which is fixed thereto and to the front panel (2);
- the connecting piece (6) is designed with an upward slanting fixing face (30) for the front edge (4a) of the rear panel (4) and a fixing flange (34, 34a), situated behind it and above it, for the rear panel part (4) situated behind said front edge; and
- the fixing place of this front edge (4a) relative to the front panel (2) is variable by a suitable selection of the configuration of the part between the vertical fixing face (16) thereof and the fixing place for the rear panel front edge (4a).

2. Floor structure according to claim 1, **characterized in that** the part between the vertical fixing face (16) and the fixing place of the rear panel front edge (4a) is formed by a face (28) which runs upwards to the front side of the motor vehicle and which continues into a backward running face (26) forming the fixing place for the rear panel front edge (Figure 1).

3. Floor structure according to claim 1, **characterized in that** the part between the vertical fixing face (16) and the fixing place of the rear panel front edge (4a) is formed by a face (30) running at an acute angle to the rear side of the vehicle (Figures 2, 3).

4. Floor structure according to claims 1 - 3, **characterized by** a section part (36) which is roof-shaped in cross-section and is situated between the fixing place of the rear panel front edge and the rear panel fixing flange (34, 34a).

## Patentansprüche

1. Kraftfahrzeug-Bodenkonstruktion mit einer Vorderplatte und einer Hinterplatte, die miteinander mittels eines Verbindungsstückes (6) verbunden sind, welches im rechten Winkel zur Längsachse des Fahrzeuges liegt, dadurch **gekennzeichnet,** daß
- am hinteren Ende der Vorderplatte (2) in Querrichtung des Fahrzeuges ein Träger (10) befestigt ist, welcher einen abgestuften Querschnitt mit einem Rand (12) zur Befestigung am Boden und mit einem in einem Abstand darüber angeordneten und im wesentlichen rechtwinklig zur Vorderplatte liegenden Befestigungsflansch (14) für eine Stirnwand (16) des Verbindungsstückes (6) hat, der im rechten Winkel bezüglich der Vorderplatte (2) angeordnet ist, wobei das Verbindungsstück mit dem Befestigungsflansch und mit der Vorderplatte (2) verbunden ist;
- das Verbindungsstück (6) mit einer nach oben geneigten Befestigungsfläche (26, 26a) für den vorderen Rand (4a) der Hinterplatte (4) und mit einem dahinter und darüber angeordneten Befestigungsflansch (34, 34a) für den rückwärtigen Bereich der Hinterplatte (4) an einer Stelle hinter deren vorderem Rand gestaltet ist und
- der Befestigungsort dieses vorderen Randes (4a) bezüglich der Vorderplatte (2) durch geeignete Wahl der Konfiguration des Abschnittes zwischen der vertikalen Stirnwand (16) und dem Befestigungsort für den vorderen Rand (4a) der Hinterplatte variabel ist.

2. Bodenkonstruktion nach Anspruch 1 dadurch **gekenn****zeichnet**, daß der Abschnitt zwischen der vertikalen Stirnwand (16) und dem Befestigungsort des vorderen Randes (4a) der Hinterplatte von einer Wand (28) gebildet ist, welche zur vorderen Seite des Kraftfahrzeuges aufwärts verläuft und sich in eine nach rückwärts verlaufende Wand (26) fortsetzt, welche den Befestigungsort für den vorderen Rand der Hinterplatte bildet (Figur 1).

3. Bodenkonstruktion nach Anspruch 1, dadurch **gekenn****zeichnet**, daß der Abschnitt zwischen der vertikalen Stirnwand (16) und dem Befestigungsort für den vorderen Rand (4a) der Hinterplatte von einer Wand (30) gebildet ist, welche unter einem spitzen Winkel zur Hinterseite des Fahrzeuges läuft (Figur 2, 3).

4. Bodenkonstruktion nach einem der Ansprüche 1 bis 3, **gekennzeichnet** durch einen Abschnitt (36), der einen dachförmigen Querschnitt hat und zwischen dem Befestigungsort des vorderen Randes der Hinterplatte und dem Befestigungsflansch (34, 34a) für die Hinterplatte gelegen ist.

## Revendications

1. Structure de plancher de véhicule automobile, comprenant un panneau avant et un panneau arrière qui sont reliés par une pièce de liaison (6) perpendiculaire à l'axe longitudinal du véhicule, **caractérisée en ce que**
- fixée à l'extrémité arrière du panneau avant (2) dans la direction transversale du véhicule, il y a une partie (10) à profil étagé comportant un rebord (12) à fixer au plancher et un rebord de fixation (14) qui se trouve au-dessus à une certaine distance, pratiquement perpendiculaire au panneau avant, et une face (16) de la pièce de liaison (6), la face (16) étant perpendiculaire au panneau avant (2) et étant fixée à la partie (10) ainsi qu'au panneau avant (2);
- la pièce de liaison (6) est prévue avec une face de fixation (30) qui est inclinée en montant vers le bord avant (4a) du panneau arrière (4) et avec un rebord de fixation (34, 34a) derrière et au-dessus de lui, pour la partie du panneau arrière (4) située derrière ledit bord avant; et
- la place de fixation de ce bord avant (4a) par rapport au panneau avant (2) est variable par un choix approprié de la configuration de la partie entre sa face de fixation verticale (16) et la place de fixation pour le bord avant (4a) du panneau arrière.

2. Structure de plancher suivant la revendication 1, **caractéri****sée en ce que** la partie comprise entre la face de fixation verticale (16) et la place de fixation du bord avant (4a) du panneau arrière est formée d'une face (28) qui monte inclinée vers le côté avant du véhicule automobile et qui se prolonge vers l'arrière par une face (26) qui forme l'emplacement de fixation pour le bord avant du panneau arrière (Fig. 1).

3. Structure de plancher suivant la revendication 1, **caractéri****sée en ce que** la partie comprise entre la face de fixation verticale (16) et l'emplacement de fixation du bord avant (4a) du panneau arrière est formée par une face (30) faisant un angle aigu vers le côté arrière du véhicule (Figs. 2 et 3).

4. Structure de plancher suivant les revendications 1 à 3, **caractérisée par** une pièce profilée (36) qui a, en coupe, la forme d'un toit et qui est située entre l'emplacement de fixation du bord avant du panneau arrière et le bord de fixation (34, 34a) du panneau arrière.
